# EUROPÄISCHE PATENTSCHRIFT

(11) **EP 0 773 141 B1**
(45) Veröffentlichungstag und Bekanntmachung des Hinweises auf die Patenterteilung: **12.02.2003**
(21) Anmeldenummer: 96117970.2
(22) Anmeldetag: 08.11.1996
(51) Int. Cl.: B60R 21/20, B60R 21/22

(54) **Knieschutzeinrichtung**
Knee protecting device
Dispositif de protection des genoux

(30) Priorität: 13.11.1995 DE 29517953 U
(43) Veröffentlichungstag der Anmeldung: 14.05.1997
(73) Patentinhaber: TRW Occupant Restraint Systems GmbH & Co. KG, 73551 Alfdorf (DE)
(72) Erfinder: Eyrainer, Heinz, 73550 Waldstetten (DE)
(74) Vertreter: Degwert, Hartmut, Dipl.-Phys.

(56) Entgegenhaltungen:
- WO-A-97/44215
- DE-U- 29 605 897
- US-A- 4 027 906
- US-A- 5 312 131
- US-A- 5 464 246

## Beschreibung

Die Erfindung betrifft eine Knieschutzeinrichtung für Fahrzeuginsassen mit einem in einem Knieraum für den Fahrzeuginsassen im Fahrzeug angeordneten schlauchförmigen Gassack, der im Fahrzeug befestigt ist und sich im aufgeblasenen Zustand quer zu den Knien erstreckt.

Eine Knieschutzeinrichtung ist bereits aus der DE-A-21 46 258 bekannt, die Teil einer großflächigen Schutzeinrichtung für Fahrzeuginsassen ist. Diese Schutzeinrichtung besteht aus mehreren Gassackkammern, wobei sich eine Kammer in den Bereich des Oberkörpers eines Fahrzeuginsassen und eine andere Kammer in den Kniefreiraum erstreckt. Diese bekannte Schutzeinrichtung ist in einem Armaturenbrett knapp unterhalb eines Handschuhfaches angeordnet, damit sich der Gassack in einem Kollisionsfall auch bis in den Bereich des Oberkörpers des Fahrzeuginsassen aufblasen kann. Bei dieser bekannten Einrichtung ist jedoch bedingt durch die feste Einbaulage im Bereich des Handschuhfaches entweder das Handschuhfach selbst oder der Kniefreiraum eingeschränkt. Der für andere Einrichtungen im Armaturenbrett verbleibende Bauraum wird somit durch die bekannte Schutzeinrichtung eingeschränkt.

Eine gattungsgemäße Knieschutzeinrichtung ist aus der US-A-5 312 131 bekannt. In der Mittelkonsole des Fahrzeugs ist dabei ein Gehäuse angeordnet, in dem ein Gasgenerator mit zwei Gassäcken gekoppelt ist. Links und rechts der Mittelkonsole treten im Rückhaltefall beide Gassäcke seitlich aus, um sich quer zu den Knien, zwischen ihnen und der Armaturentafel anzuordnen. Beim Aufprall der Knie stützt sich der Gassack an der Armaturentafel ab, die entsprechend stabil ausgeführt sein muß. Zwar erstrecken sich die gefalteten Gassäcke nicht in den Fuß- und Knieraum, jedoch ist die Unterbringung des gesamten Systems in der Mittelkonsole problematisch, denn es müssen Gehäuse, Gasgenerator und zwei gefaltete Gassäcke untergebracht werden.

Aus der US-A-5 464 246 ist ein im Sitz integriertes Seitengassack-Schutzsystem bekannt, bei dem links und rechts des Sitzes, in der Seitenwand des Sitzteils und der Rückenlehne jeweils ein schlauchförmiger Gassack untergebracht ist. Die beiden Gassäcke dienen ausschließlich dem Seitenaufprallschutz und sollen den Insassen seitlich in beiden Richtungen im Sitz halten. Im aufgeblasenen Zustand erstrecken sich die beiden Gassäcke vom vorderen Rand des Sitzteils zum oberen Rand der Rückenlehne. Die Anordnung der Gassäcke soll so sein, daß sie sich beim Aufblasen nicht zum Insassen hin bewegen, sondern seitlich zu ihm.

Aufgabe der Erfindung ist es, eine Knieschutzeinrichtung für Fahrzeuginsassen so zu verbessern, daß ohne Einschränkung der Sicherheit für den Fahrzeuginsassen die Knieschutzeinrichtung beliebig in das Fahrzeug integriert werden kann, so daß durch sie der verbleibende Bauraum für im Armaturenbrett anzuordnende Einrichtungen und der Kniefreiraum wenig eingeschränkt wird.

Die Aufgabe wird erfindungsgemäß durch eine Knieschutzeinrichtung mit den Merkmalen des Anspruchs 1 gelöst. Der erfindungsgemäße Gassack kann um im Armaturenbrett vorgesehene Einrichtungen herum angeordnet werden, so daß die Anordnungsmöglichkeit für die Einrichtungen im Armaturenbrett selbst durch die Knieschutzeinrichtung kaum noch eingeschränkt wird. Im Kollisionsfall verkürzt sich der Gassack beim Aufblasen in Längsrichtung so, daß er, da er an seinen seitlichen Enden befestigt ist, aus seiner Abdeckung hervortritt und sich in den Bereich des Fußraumes im Fahrzeug erstreckt. Der erfindungsgemäße Gassack weist eine Doppelfunktion auf, indem er einerseits als Dämpfungskissen für die im Kollisionsfall in den Gassack eintauchenden Knie eines Fahrzeuginsassen dient und andererseits die Vorwärtsbewegung des gesamten Oberschenkelund Beckenbereichs eines Fahrzeuginsassen im Kollisionsfall von Beginn an einschränkt. Es kommt somit zu keinen unerwünscht hohen Beschleunigungswerten für den Oberschenkel- und Beckenbereich des Fahrzeuginsassen.

Bei einer bevorzugten Ausführungsform weist das Gassackmaterial eine derartige Webart auf, daß diese zur Verkürzung des Gassacks in Längsrichtung beim Aufblasen führt. Beispielsweise kann das Gassackmaterial eine solche Webart aufweisen, daß sich keine Faser ausschließlich in Längsrichtung des Gassacks, sondern nur wendelförmig längs des Gassackes in dessen Mantel erstreckt.

Gemäß einer vorteilhaften Weiterbildung des erfindungsgemäßen Gassacks kann dieser mit einem seitlichen Ende im Bereich der Mittelkonsole und/oder mit einem anderen seitlichen Ende im Bereich der A-Säule am Fahrzeug befestigt werden, also an Stellen, wo üblicherweise auch mehr Platz für entsprechende Befestigungseinrichtungen vorhanden ist. Der Gassack ist damit im wesentlichen, in Fahrtrichtung gesehen, links und rechts seitlich vor den Knien befestigt, so daß er sich in aufgeblasenem Zustand ähnlich einem Gurt vorderhalb der Knie quer zu diesen erstreckt. Durch diese Weiterbildung ist es auch überflüssig, den Gassack so groß zu dimensionieren, daß er den gesamten Kniefreiraum ausfüllt, da sich der Gassack im Kollisionsfall nicht mehr am Armaturenbrett selbst abstützen muß, sondern auf Zug belastbar ist.

Eine Weiterbildung der erfindungsgemäßen Knieschutzeinrichtung sieht vor, daß an einer oder mehreren Befestigungsstellen des Gassackes zumindest ein dem Gassack zugeordneter Gasgenerator in der Mittelkonsole und/oder im Bereich der A-Säule im Fahrzeug integriert ist.

Gemäß einer weiteren vorteilhaften Ausführungsform ist der Gassack im Bereich der Außenkontur des Armaturenbrettes im Fußraum des Fahrzeugs angeordnet, wo er den Bauraum für andere im Armaturenbrett vorgesehene Einrichtungen für den Fahrer oder Beifahrer, wie z.B. Schalter, die Lenksäule oder das Handschuhfach, nicht einschränkt. Die Knieschutzeinrichtung kann dabei hinter dem Armaturenbrett oder auch hinter einer anderen Abdeckung im Bereich des Fußraumes im Bereich der Außenkontur des Armaturenbrettes selbst versteckt angeordnet sein. Das Armaturenbrett muß damit kaum noch dem Gassack angepaßt werden, sondern der Gassack ist umgekehrt im wesentlichen dem Armaturenbrett anpaßbar, indem er wie ein nicht aufgeblasener Schlauch entlang von dessen Außenkontur im Fußraum angeordnet ist.

Gemäß einer alternativen Ausführungsform, bei der eine zuvor beschriebene erfindungsgemäße Knieschutzeinrichtung jeweils auf der Fahrer- und Beifahrerseite des Fahrzeugs angeordnet ist und eine gemeinsame Knieschutzeinrichtung bildet, sind die den einzelnen Knieschutzeinrichtungen zugeordneten Gassäcke im Bereich der Fahrzeugmitte miteinander verbunden, wodurch entsprechende Befestigungseinrichtungen zwischen den Gassäcken vereinfacht ausgebildet sein können. Zudem tritt im Falle einer gleichzeitigen Auslösung des Fahrer- und Beifahrer-Gassacks keine zu unsymmetrische Belastung auf die Befestigungseinrichtung im Bereich der Fahrzeugmitte auf.

Es können sowohl für den Gassack auf der Fahrer- als auch der Beifahrerseite eine oder mehrere separate Gasgeneratoren vorhanden sein, wobei jedoch gemäß einer vorteilhaften Weiterbildung ein gemeinsamer Gasgenerator für beide Gassäcke vorhanden ist, der zudem auch noch optional in der Mittelkonsole oder im Armaturenbrett integrierbar ist. Gerade im Bereich der Mittelkonsole ist üblicherweise etwas mehr Bauraum vorhanden, um Befestigungselemente für den Gassack oder einen oder mehrere Gasgeneratoren unterzubringen, wodurch sich für die Konstruktion des Armaturenbrettes im Bereich unmittelbar vor dem Fahrzeuginsassen ein größerer Gestaltungsspielraum ergibt.

Neben einer stets synchronen Aktivierung beider Gassäcke kann gemäß einer anderen alternativen Ausführungsform der Erfindung auch nur ein einzelner Gassack entfaltet werden. Eine Einrichtung zum Prüfen der Sitzbelegung prüft, ob z.B. nur der Fahrersitz belegt ist, und sorgt dafür, daß im Kollisionsfall auch nur der entsprechende Gassack auf der Fahrerseite entfaltet wird. Dies ist deshalb besonders wirtschaftlich, da nach einem Kollisionsfall bei der Fahrzeugreparatur nur auf einer Seite eine entsprechende Knieschutzeinrichtung wieder eingebaut werden muß.

Weitere Merkmale und Vorteile der Erfindung ergeben sich aus der folgenden Beschreibung und aus den Zeichnungen, auf die Bezug genommen wird. In der Zeichnung zeigen:
- Figur 1 in Fahrtrichtung einen Fahrzeuginnenraum im Bereich des Armaturenbrettes mit der erfindungsgemäßen Knieschutzeinrichtung gemäß einer ersten Ausführungsform in aktiviertem und nicht aktiviertem Zustand auf der Fahrer- und Beifahrerseite;
- Figur 2 eine schematische Seitenansicht der in Fig. 1 gezeigten erfindungsgemäßen Knieschutzeinrichtung in aktiviertem und nicht aktiviertem Zustand; und
- Figur 3 in Fahrtrichtung einen Fahrzeuginnenraum im Bereich des Armaturenbrettes mit der erfindungsgemäßen Knieschutzeinrichtung gemäß einer zweiten Ausführungsform, bei der Fahrer- und Beifahrergassack miteinander verbunden sind.

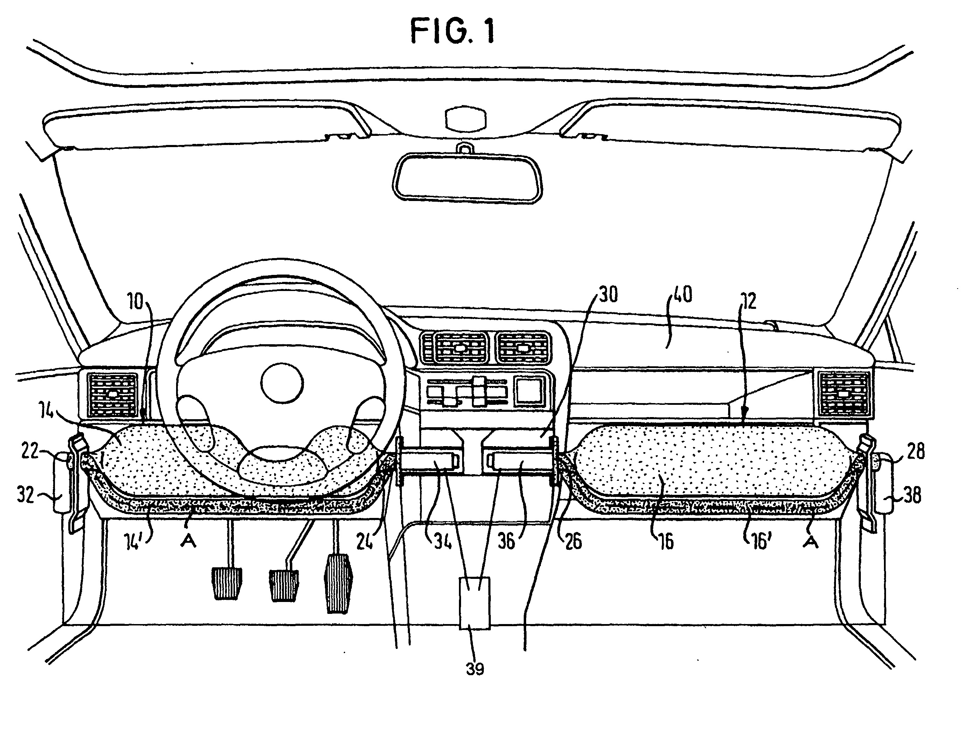

In Figur 1 ist eine Knieschutzeinrichtung für Fahrzeuginsassen gezeigt, die eine Knieschutzeinrichtung 10 für die Fahrerseite und eine Knieschutzeinrichtung 12 für die Beifahrerseite umfaßt.

Jede einzelne Knieschutzeinrichtung 10, 12 wiederum umfaßt einen Gassack 14, 16, der schlauchförmig ausgebildet ist. Der nicht aktivierte Gassack auf der Fahrerseite ist dunkler gezeichnet und mit der Bezugszahl 14' versehen, und der nicht aktivierte Gassack auf der Beifahrerseite ist ebenfalls dunkler gezeichnet und mit der Bezugszahl 16' versehen. Die heller gezeichneten, aktivierten Gassäcke sind mit den Bezugszahlen 14, 16 versehen.

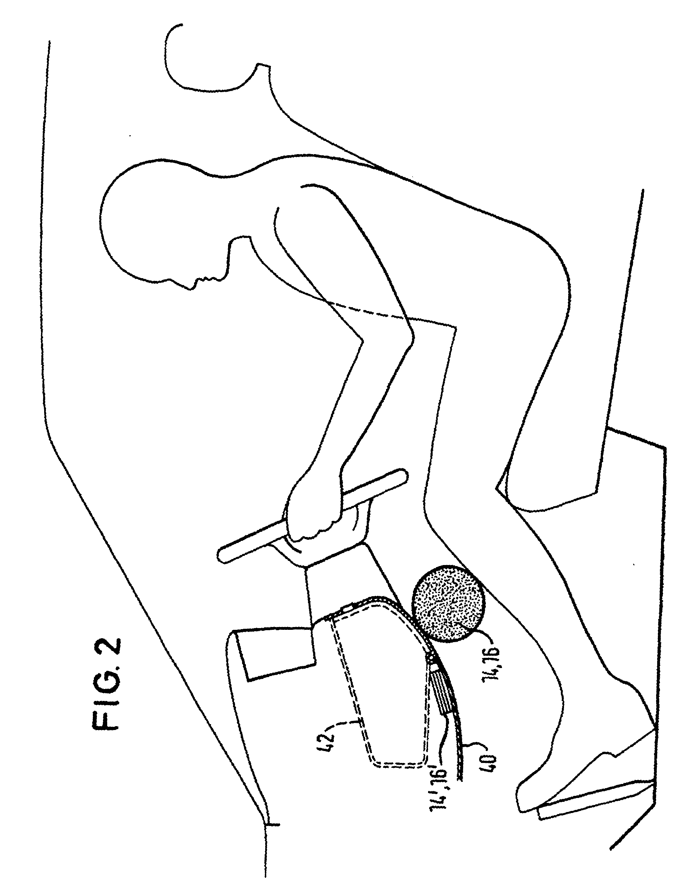

Beide Gassäcke 14', 16' sind in nicht aktiviertem Zustand, wie auch Figur 2 zu entnehmen ist, hinter einem Armaturenbrett 40 im Bereich von dessen Außenkontur im Fußraum angeordnet. Auf der Fahrerseite verläuft der Gassack 14' deutlich unterhalb der Lenksäule. Auf der Beifahrerseite erstreckt sich der Gassack 16' unterhalb eines in Figur 2 mit unterbrochenen Linien angedeuteten Handschuhfaches 42, ohne daß der Innenraum des Handschuhfaches 42 durch den Gassack 16' gegenüber einem herkömmlichen Handschuhfach eingeschränkt werden muß. Jeder Gassack 14, 16 erstreckt sich also quer zur Fahrtrichtung und ist jeweils an seinem der Fahrzeugmitte zugewandten Ende 24 bzw. 26 an dem Fahrzeug im Bereich der Mittelkonsole 30, die entsprechende Ausnehmung zur Aufnahme der Enden 24, 26 hat, befestigt. Die jeweils den Fahrzeugaußenseiten zugewandten Enden 22, 28 der Gassäcke 14 bzw. 16 sind am Fahrzeug im Bereich der A-Säule befestigt. Beide Befestigungsstellen jedes Gassacks 14, 16 liegen dabei in etwa auf Kniehöhe des Fahrzeuginsassen und vorzugsweise links bzw. rechts vor dem entsprechenden Knie eines Fahrzeuginsassen. An jedem seitlichen Ende 22, 24 und 26, 28 der Gassäcke 14 bzw. 16 ist jeweils ein Gasgenerator 32, 34, 36, 38 angeordnet, wobei die Gasgeneratoren 34, 36, die den Enden 24 bzw. 26 der Gassäcke 14 bzw. 16 zugeordnet sind, jeweils in der Mittelkonsole 30 integriert sind. Die Gasgeneratoren 32, 38, welche den Enden 22 bzw. 28 zugeordnet sind, sind im Fahrzeug im Bereich der A-Säule integriert. Die Gasgeneratoren 32 und 38 können dabei z.B. seitlich in das Armaturenbrett oder auch in einer Fahrzeugtür selbst eingebaut werden.

Die Gasgeneratoren 32, 34 und 36, 38 der Gassäcke 14 bzw. 16 weisen jeweils voneinander getrennte Zündeinrichtungen auf, welche mit einer schematisch dargestellten Einrichtung 39 zum Prüfen einer Sitzbelegung gekoppelt sind. Die Einrichtung 39 zum Prüfen der Sitzbelegung umfaßt dabei beispielsweise einen im Sitz integrierten Drucksensor, der auf Belegung des Sitzes anspricht, oder einen im Rückhaltegurt integrierten Sensor, der auf das Anlegen des Rückhaltegurtes anspricht, und eine Steuereinheit.

In einem Kollisionsfall werden, wenn die Einrichtung zum Prüfen der Sitzbelegung die Anwesenheit eines Fahrers oder zusätzlich eines Beifahrers anzeigt, die pyrotechnischen Gasgeneratoren 32, 34 und gegebenenfalls 36, 38 aktiviert. Über entsprechende Durchtrittsöffnungen im Bereich der seitlichen Enden 22, 24, 26 und 28 treten die freigesetzten Gase in die Innenräume der Gassäcke 14, 16 ein und entfalten diese. Üblicherweise ist nur ein Sensor zur Ermittlung der Belegung des Beifahrersitzes vorgesehen.

Dadurch, daß das Gassackmaterial eine derartige Webart aufweist, daß sich der schlauchförmige Gassack beim Aufblasen in Längsrichtung gegenüber seinem nicht aufgeblasenen Zustand verkürzt, tritt der in nicht aufgeblasenem Zustand bogenförmig um die Knie des jeweiligen Fahrzeuginsassen herum angeordneten Gassack 14 oder 16 aus dem Armaturenbrett und erstreckt sich nahezu linear zwischen seinen befestigten Enden 22 und 24 bzw. 26 und 28. Es entsteht dabei eine starke Zugspannung im Gewebe. Somit wandern, wie in Figur 2 zu erkennen ist, die Gassäcke 14 und 16 auf der Fahrer- bzw. Beifahrerseite in Richtung Knie des Fahrzeuginsassen. Jeder Gassack 14, 16 bildet einen unmittelbar vor den Knien eines Fahrzeuginsassen sich quer zu diesen erstreckenden, auf Zug beanspruchbaren Schlauch, der eine Rückhaltefunktion für den Oberschenkel und Beckenbereich des Fahrzeuginsassen bildet.

Im Kollisionsfall ergibt sich damit eine äußerst frühzeitige Rückhaltung des gesamten unteren Torsobereichs eines Fahrzeuginsassen, wodurch sich die Beschleunigungswerte und die Relativgeschwindigkeit des unteren Torsobereichs zum Fahrzeug auf relativ niedrigen Werten halten lassen, so daß die durch die Knieschutzeinrichtungen 10, 12 aufzunehmende kinetische Energie deutlich geringer als bei herkömmlichen Knieschutzeinrichtungen ist.

Es ist deshalb auch nicht nötig, die Gassäcke 14, 16 mit Abströmeinrichtungen in Form von Öffnungen oder dergleichen zu versehen, da der Innendruck der aufgeblasenen Gassäcke 14, 16 gegenüber üblichen Gassäcken relativ hoch ist. Trotz der relativ kleinen wirksamen Auftrefffläche der Knie bilden die Knieschutzeinrichtungen 10, 12 wegen ihrer ausgezeichneten Rückhaltewirkung und der zusätzlichen Dämpfung eine hervorragende gemeinsame Knieschutzeinrichtung für den gesamten unteren Torsobereich.

Zusätzliche gepolsterte Prallflächen oder Deformationsteile im Bereich des Armaturenbrettes oder der Lenksäule sind überflüssig. Durch die Anordnung der Gassäcke 14, 16 im Bereich der Außenkontur des Armaturenbrettes, also deutlich vom Bereich der Knie der Fahrzeuginsassen entfernt, ergeben sich keine Einschränkungen der Knie- oder Beinfreiheit für die Fahrzeuginsassen.

Es ist nicht zwingend erforderlich, daß ein Gassack 14 oder 16 hinter dem Armaturenbrett angeordnet ist. Es wäre ebenso möglich, daß er sich außerhalb des Armaturenbrettes quer zum Fußraum des Fahrzeugs erstreckt.

Neben der zwei einzelne Knieschutzeinrichtungen 10, 12 umfassenden gemeinsamen Knieschutzeinrichtung ist es auch möglich, nur eine Knieschutzeinrichtung 10 oder 12 für die Fahrer- oder Beifahrerseite vorzusehen.

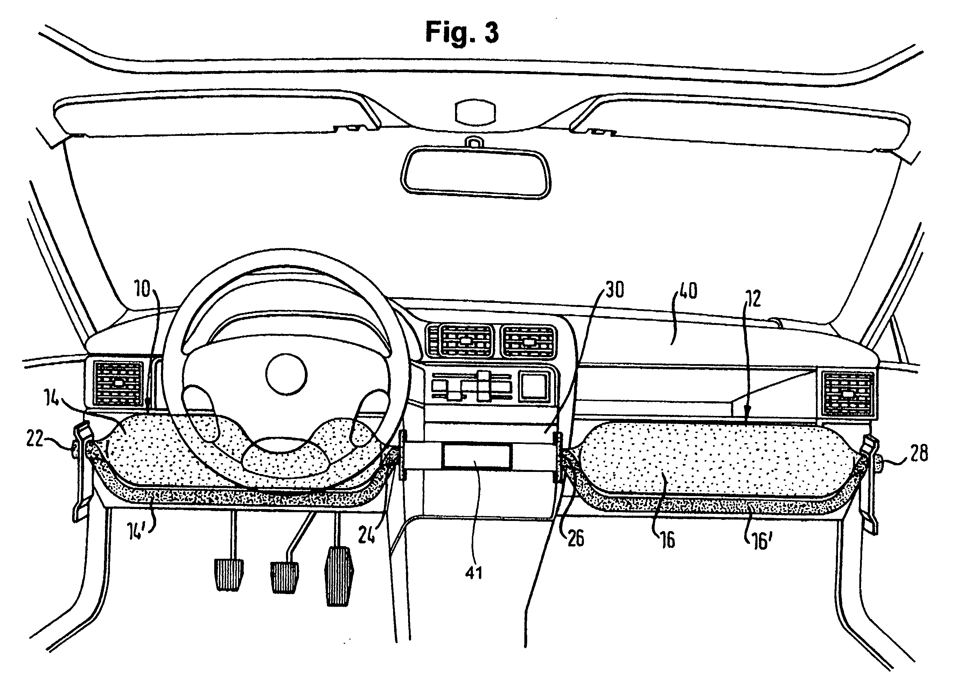

Zusätzlich kann neben der in Figur 1 gezeigten Ausführungsform nur ein gemeinsamer Gasgenerator 41 für beide Gassäcke 14, 16 vorhanden sein, wie in Figur 3 gezeigt, der dann im Bereich der Mittelkonsole 30 in dieser integriert angeordnet ist. In diesem Fall werden die beiden Gassäcke unabhängig von der Sitzbelegung synchron aufgeblasen. Da die Gassäcke 14, 16 zusätzlich noch an ihren Enden 24, 26 miteinander verbunden sind, ergibt sich eine durchgehende Knieschutzeinrichtung, welche an ihrem linken und rechten Ende 22, 28 jeweils an der entsprechenden A-Säule mit dem Fahrzeug verbunden ist, so daß eine gemeinsame Befestigungseinrichtung der Gassäcke 14, 16 im Bereich der Mittelkonsole 30 hauptsächlich nur noch eine Belastung in Fahrtrichtung aufnehmen muß.

## Patentansprüche

1. Knieschutzeinrichtung für Fahrzeuginsassen, mit einem in einem Knieraum für den Fahrzeuginsassen im Fahrzeug angeordneten schlauchförmigen Gassack (14, 16), der im Fahrzeug befestigt ist und sich im aufgeblasenen Zustand quer zu den knien erstreckt **dadurch gekennzeichnet, daß** der Gassack (14, 16) an seinen beiden seitlichen Enden (22, 24, 26, 28) im Fahrzeug so befestigt ist und daß er sich beim Aufblasen in Längsrichtung gegenüber seinem im nicht aufgeblasenen Zustand so verkürzt, daß er sich in Richtung Knie des Fahrzeuginsassen bewegt.

2. Knieschutzeinrichtung nach Anspruch 1, **dadurch gekennzeichnet, daß** das Gassackmaterial eine derartige Webart aufweist, daß sich beim Aufblasen des Gassacks (14, 16) seine Länge gegenüber dem nicht aufgeblasenen Zustand verringert.

3. Knieschutzeinrichtung nach einem der vorstehenden Ansprüche, **dadurch gekennzeichnet, daß** der Gassack (14, 16) mit einem seitlichen Ende (24, 26) im Bereich der Mittelkonsole (30) und/oder mit einem anderen seitlichen Ende (22, 28) im Bereich der A-Säule am Fahrzeug befestigbar ist.

4. Knieschutzeinrichtung nach einem der vorstehenden Ansprüche, **dadurch gekennzeichnet, daß** an einer oder mehreren Befestigungsstellen des Gassackes (14, 16) zumindest ein dem Gassack (14, 16) zugeordneter Gasgenerator (32, 34, 36, 38) in der Mittelkonsole (30) und/oder im Bereich der A-Säule im Fahrzeug integriert ist.

5. Knieschutzeinrichtung nach einem der vorstehenden Ansprüche, **dadurch gekennzeichnet, daß** der Gassack (14, 16) im Bereich einer Außenkontur eines Armaturenbrettes (40) im Fußraum angeordnet ist.

6. Knieschutzeinrichtung nach einem der vorstehenden Ansprüche, **gekennzeichnet durch** eine Einrichtung (39) zum Prüfen der Belegung des zur Knieschutzeinrichtung zugehörigen Sitzes, die so ausgebildet ist, daß sie nur eine Zündung des Gasgenerators (32, 34, 36, 38) bei belegtem Sitz erlaubt.

7. Knieschutzeinrichtung für die Fahrer- und die Beifahrerseite eines Fahrzeugs, mit jeweils einer Knieschutzeinrichtung (10, 12) nach einem der vorstehenden Ansprüche auf der Fahrer- und Beifahrerseite, **dadurch gekennzeichnet, daß** die beiden den Knieschutzeinrichtungen (10, 12) zugeordneten Gassäcke (14, 16) im Bereich der Fahrzeugmitte miteinander verbunden sind.

8. Knieschutzeinrichtung nach Anspruch 7, **dadurch gekennzeichnet, daß** beide Gassäcke (14, 16) durch einen gemeinsamen Gasgenerator aufblasbar sind.

9. Knieschutzeinrichtung nach Anspruch 8, **dadurch gekennzeichnet, daß** der gemeinsame Gasgenerator 41 in die Mittelkonsole (30) oder das Armaturenbrett integrierbar ist.

## Claims

1. A knee guard device for vehicle occupants, comprising a gas bag (14, 16) which is in the form of a flexible tube, is arranged in the vehicle in a knee well for the vehicle occupant, is secured in the vehicle and in the inflated condition extends athwart the knees, **characterized in that** the gas bag (14, 16) is so secured at its two lateral ends (22, 24, 26, 28) in the vehicle and is so shortened in the longitudinal direction on inflation compared with its non-inflated condition that it moves towards the knees of the vehicle occupant.

2. The knee guard device as claimed in claim 1, **characterized in that** the gas bag material has such a weave that on inflation of the gas bag (14, 16) its length becomes shorter compared with the non-inflated state.

3. The knee guard device as claimed in either one of the preceding claims, **characterized in that** the gas bag (14, 16) is adapted to be secured at a lateral end (24, 26) thereof in the region of the center console (30) and/or at another lateral end (22, 28) in the region of the A-column of the vehicle.

4. The knee guard device as claimed in any one of the preceding claims, **characterized in that** at one or more attachment points of the gas bag (14, 16) at least one gas generator (32, 34, 36, 38) associated with the gas bag (14, 16) is integrated in the center console (30) and/or in the region of the A-column in the vehicle.

5. The knee guard device as claimed in any one of the preceding claims, **characterized in that** the gas bag (14, 16) is arranged in the region of an outer edge of a dashboard (40) in the foot well.

6. The knee guard device as claimed in any one of the preceding claims, **characterized by** a means (39) for checking the occupancy of the seat which corresponds to the knee guard device, such means being designed so that it only allows ignition of the gas generator (32, 34, 36, 38) if the seat is occupied.

7. A knee guard device for the driver's side and the front passenger's side of a vehicle, comprising a knee guard device (10, 12) as claimed in any one of the preceding claims on each of the driver's side and the front passenger's side, **characterized in that** the two gas bags (14, 16) associated with the knee guard devices (10, 12) are connected with one another in the region of the center of the vehicle.

8. The knee guard device as claimed in claim 7, **characterized in that** both gas bags (14, 16) are adapted to be inflated by a common gas generator.

9. The knee guard device as claimed in claim 8, **characterized in that** the common gas generator (41) is adapted to be integrated in the center console (30) or in the dashboard.

## Revendications

1. Dispositif de protection des genoux pour les passagers d'un véhicule avec un coussin à gaz (14, 16) ayant la forme d'un tuyau, disposé dans le véhicule dans un espace pour les genoux des passagers du véhicule et qui s'étend à l'état gonflé transversalement aux genoux, **caractérisé en ce que** le coussin à gaz (14, 16) est fixé par ses deux extrémités latérales (22, 24, 26, 28) dans le véhicule de telle sorte, et qu'il se raccourcit lors de son gonflage dans le sens longitudinal par rapport à son état non gonflé de telle sorte qu'il se déplace en direction des genoux du passager du véhicule.

2. Dispositif de protection des genoux selon la revendication 1, **caractérisé en ce que** la matière du coussin à gaz présente un tel mode de tissage que lors du gonflage du coussin à gaz (14, 16) sa longueur se réduit par rapport à son état non gonflé.

3. Dispositif de protection des genoux selon l'une des revendications précédentes, **caractérisé en ce que** le coussin à gaz (14, 16) peut être fixé par une extrémité latérale (24, 26) dans la zone de la console centrale (30) et/ou par une autre extrémité latérale (22, 28) dans la zone de la colonne A sur le véhicule.

4. Dispositif de protection des genoux selon l'une des revendications précédentes, **caractérisé en ce que** sur un ou plusieurs points de fixation du coussin à gaz (14, 16) au moins un générateur de gaz (32, 34, 36, 38), associé au coussin à gaz (14, 16), est intégré dans la console centrale (30) et/ou dans la zone de la colonne A dans le véhicule.

5. Dispositif de protection des genoux selon l'une des revendications précédentes, **caractérisé en ce que** le coussin à gaz (14, 16) est disposé dans l'espace pour les pieds dans la zone d'un contour extérieur du tableau de bord (40).

6. Dispositif de protection des genoux selon l'une des revendications précédentes, **caractérisé par** un dispositif (39) servant à contrôler si le siège qui est associé au dispositif de protection des genoux est occupé, dispositif qui est constitué de telle sorte qu'il ne permet un allumage du générateur de gaz (32, 34, 36, 38) que si le siège est occupé.

7. Dispositif de protection des genoux pour le côté du conducteur et pour la place à côté du conducteur d'un véhicule, avec respectivement un dispositif de protection des genoux (10, 12) selon l'une des revendications précédentes, du côté du conducteur et de l'autre côté, **caractérisé en ce que** les deux coussins à gaz (14, 16), associés aux dispositifs de protection des genoux (10, 12), sont reliés l'un à l'autre dans la zone du centre du véhicule.

8. Dispositif de protection des genoux selon la revendication 7, **caractérisé en ce que** les deux coussins à gaz (14, 16) peuvent être gonflés par un générateur de gaz commun.

9. Dispositif de protection des genoux selon la revendication 8, **caractérisé en ce que** le générateur de gaz commun 41 peut être intégré dans la console centrale (30) ou dans le tableau de bord.
